## Europäisches Patentamt
## European Patent Office
## Office européen des brevets

(11) Numéro de publication: **0 331 589**
**A1**

# (12) DEMANDE DE BREVET EUROPEEN

(21) Numéro de dépôt: **89420062.5**

(22) Date de dépôt: **21.02.89**

(51) Int. Cl.⁴: **G 01 F 11/28**
**B 65 D 47/06**

(30) Priorité: **29.02.88 FR 8802734**

(43) Date de publication de la demande:
**06.09.89 Bulletin 89/36**

(84) Etats contractants désignés:
**BE CH DE ES GB IT LI NL**

(71) Demandeur: **ETABLISSEMENTS RAVICHON SARL**
**Groissiat Lieu dit "Les Chaix"**
**F-01870 Martignat (FR)**

(72) Inventeur: **Ravichon, Georges**
**50 rue d'Echallon**
**F-01100 Oyonnax (FR)**

(74) Mandataire: **Laurent, Michel et al**
**Cabinet LAURENT 20, rue Louis Chirpaz B.P. 32**
**F-69131 Ecully Cédex (FR)**

(54) **Dispositif permettant d'assurer le prélèvement d'une quantité déterminée de liquide contenu dans un récipient.**

(57) Dispositif permettant d'assurer le prélèvement d'une quantité déterminée de liquide contenu dans un récipient (4) se présentant sous la forme d'un ensemble (1) adaptable dans le goulot (3) du récipient et ayant sensiblement la forme d'une cuve prolongée à sa base par un tube (7) formant plongeur et venant jusqu'à proximité du fond dudit récipient, cette cuve comportant un conduit interne (6) s'étendant sur une hauteur déterminée H définissant le volume de liquide prélevé.

Il se **caractérise** en ce que ladite cuve (2) présente également, à sa partie supérieure, un ensemble (9), monté de manière flexible et pouvant venir, d'une part, plaquer contre l'extrémité du conduit de distribution (6) lorsque le récipient est fermé et, d'autre part, après ouverture, servir d'élément protecteur évitant tout rejet vers l'extérieur du liquide.

FIG.1

EP 0 331 589 A1

Description

## DISPOSITIF PERMETTANT D'ASSURER LE PRELEVEMENT D'UNE QUANTITE DETERMINEE DE LIQUIDE CONTENU DANS UN RECIPIENT.

La présente invention concerne un dispositif permettant d'assurer le prélèvement d'une quantité déterminée de liquide contenu à l'intérieur d'un récipient de stockage.

A ce jour, parmi les diverses solutions proposées pour prélever une quantité déterminée de liquide contenu à l'intérieur d'un récipient de stockage (bouteille, bidon..), en-dehors de la solution qui consiste à déverser le liquide à l'intérieur d'une mesure ou à le prélever au moyen d'une pipette, il a été proposé, notamment dans le cas où les récipients sont des récipients souples, d'équiper le bouchon, d'un ensemble que l'on peut désigner par l'expression "dosette" et qui, d'une manière générale, se présente sous la forme d'une cuvette disposée dans le goulot et prolongée à sa base par un tube venant jusqu'à proximité du fond du récipient de telle sorte, que par simple pression sur les parois du récipient, on puisse faire migrer une quantité donnée de liquide à l'intérieur de ladite cuve.

Le GB-A-2 067 517 décrit une solution du type précité dans laquelle on retrouve également un conduit disposé à l'intérieur de la cuve et qui permet de déterminer la quantité de liquide prélevé. La solution décrite dans ce document présente cependant un inconvénient majeur à savoir que, notamment dans le cas de liquides dangereux, toxiques, il y a des risques de rejet vers l'extérieur du liquide lorsqu'on effectue le transfert et la mesure. Par ailleurs, le couvercle ou bouchon que comporte l'ensemble décrit dans ce document n'est pas parfaitement sûr et peut éventuellement s'ouvrir lors du transport ou du stockage, et n'assure pas une étanchéité parfaite.

Or on a trouvé, et c'est ce qui fait l'object de la présente invention, un dispositif perfectionné qui surmonte ces inconvénients.

D'une manière générale, l'invention concerne donc un dispositif permettant d'assurer le prélèvement d'une quantité déterminée de liquide contenu dans un récipient, ce dispositif se présentant sous la forme d'un ensemble, adaptable dans le goulot du récipient, et ayant sensiblement la forme d'une cuve prolongée à sa base par un tube formant plongeur et venant jusqu'à proximité du fond, un conduit interne étant par ailleurs prévu à l'intérieur de ladite cuve et s'étendant sur une hauteur déterminée de manière à définir le volume de liquide prélevé.

Le dispositif selon l'invention se caractérise en ce que la cuve précitée comporte également, à sa partie supérieure, un ensemble monté de manière flexible et pouvant venir, d'une part, plaquer contre l'extrémité du conduit de distribution lorsque le récipient est fermé et, d'autre part, après ouverture, servir d'élément protecteur évitant tout rejet vers l'extérieur du liquide.

Avantageusement, l'ensemble obturateur et déflecteur ainsi réalisé est constitué par une coupelle montée à la périphérie supérieure de la cuve par l'intermédiaire d'éléments assurant une flexibilité dans le sens axial et se présentant sous la forme de barrettes espacées.

L'invention et les avantages qu'elle apporte seront cependant mieux compris grâce à l'exemple de réalisation donné ci-après à titre indicatif et non limitatif et qui est illustré par les schémas annexés dans lesquels :

- la figure 1 est une vue schématique en perspective éclatée de l'ensemble d'un récipient équipé d'un dispositif conforme à l'invention ;
- la figure 2 est une figure en coupe éclatée des différents éléments formant le dispositif conforme à l'invention ;
- la figure 3 est également une vue en coupe partielle montrant le dispositif complet monté à l'intérieur du goulot d'un récipient de stockage de liquide ;
- la figure 4 est une vue de détail illustrant la manière dont est réalisée l'obturation du tube de prélèvement lorsque le récipient est fermé.

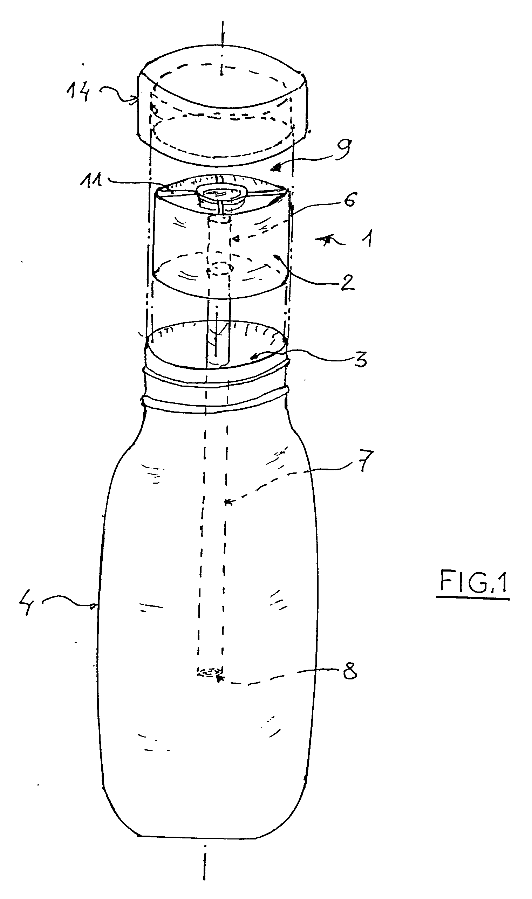

Si l'on se reporte aux schémas annexés et plus particulièrement à la figure 1, le dispositif conforme à l'invention, désigné par la référence générale (1), se présente sous la forme d'un ensemble constitué essentiellement d'une cuve (2) destinée à être insérée dans le goulot (3) d'une bouteille (4) (ou tout autre type de récipient). Il est impératif que le récipient équipé d'un dispositif conforme à l'invention soit réalisé de telle sorte que ses parois présentent une certaine souplesse afin de pouvoir exercer une pression lorsque l'opération de prélèvement est réalisée.

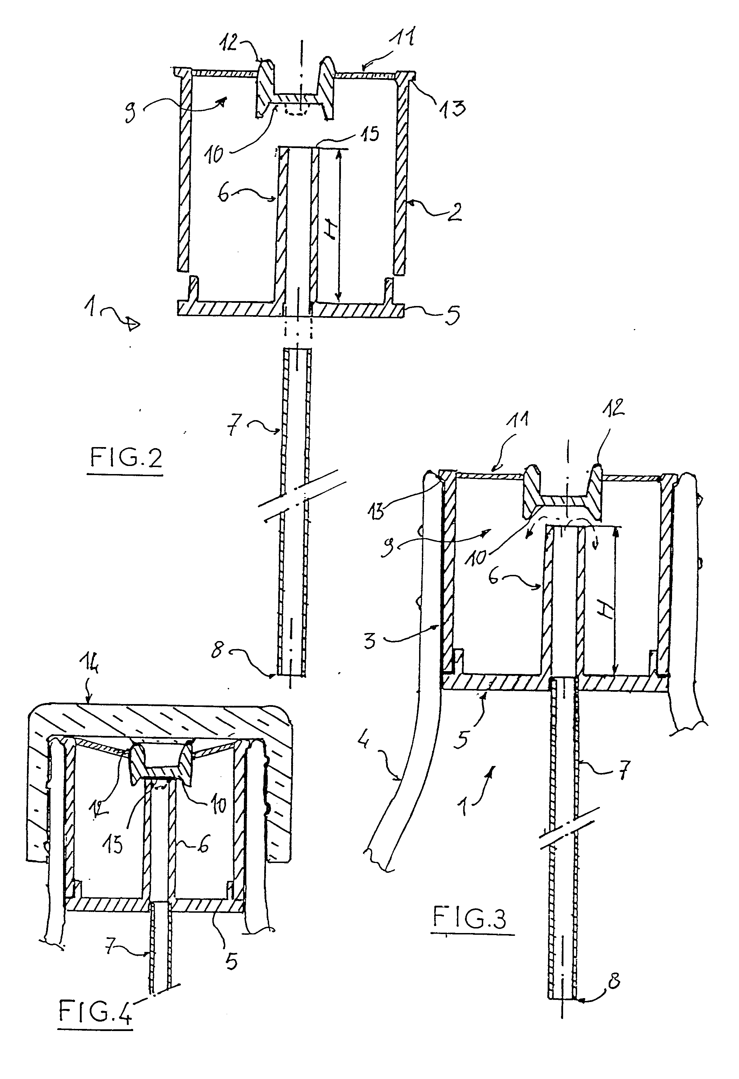

Si l'on se reporte aux vues de détail (figures 2 et 3), le dispositif (1), qui de préférence est obtenu par moulage d'une matière plastique, est constitué essentiellement d'une cuve (2) dont la hauteur correspond au volume prédéterminé de liquide que l'on souhaite prélever. La section extérieure de cette cuve est telle qu'elle puisse s'adapter de manière parfaite à l'intérieur du goulot (3) du récipient (4). Cette cuve est fermée à sa base (5) et, dans le volume ainsi réalisé, est disposé axialement un conduit de distribution (6) dont la hauteur H définit la quantité de liquide à prélever. Ce conduit (6) est prolongé par un conduit (7) qui dans la suite de la description sera désigné par l'expression "plongeur" et dont la longueur est telle que lorsque le dispositif est mis en place à l'intérieur du récipient, son extrémité (8) vienne à proximité du fond dudit récipient.

Conformément à l'invention, à la partie supérieure de la cuve (2) est disposé un ensemble (9) formant obturateur lorsque le récipient est fermé et qui, lorsque l'on souhaite réaliser le prélèvement, évite tout rejet vers l'extérieur du liquide. Pour ce faire, ledit ensemble (9) se présente essentiellement sous la forme d'une coupelle ou cuvette (10). Cette cuvette ou coupelle (10) est fixée, par l'intermédiaire de lames ou bras flexibles (11), obtenus par exemple par moulage, et qui s'étendent radialement. Dans l'exemple de réalisation illustré, ces bras (11) sont au nombre de quatre et cela n'est pas limitatif. Par ailleurs, la coupelle (10) présente à sa partie supérieure une couronne en relief (12) débordant légèrement au-dessus du plan supérieur de la cuvette (2).

La mise en place et le fonctionnement d'un tel dispositif de prélèvement est le suivant.

L'ensemble est disposé à l'intérieur du goulot (3) et vient reposer par le biais de la couronne périphérique (13) de la cuvette (2) sur le bord supérieur dudit goulot (3). Dans cette position, la couronne (12) dé borde légèrement par rapport au bord supérieur dudit goulot. Par suite, lorsque le bouchon (14) (voir figures 1 et 4) est mis en place, le fond de ce bouchon vient appuyer sur la couronne (12) de telle sorte que l'obturateur (10) vienne s'emboiter sur l'extrémité (15) du conduit de distribution (6). Dans cette position, on assure donc une étanchéité parfaite et même si le récipient est renversé, il n'y a aucune fuite possible de liquide vers l'extérieur. Lorsque l'on souhaite effectuer un prélèvement, après avoir enlevé le bouchon (13) (ce qui provoque le relèvement automatique de l'obturateur (10) sous l'action des bras de liaison flexibles) par simple pression sur la paroi souple du récipient, on provoque la montée du liquide à l'intérieur de la cuvette de stockage. Lors de ce prélèvement, grâce à la présence de la coupelle anti-rejet (10) qui fait face à l'extrémité supérieure du tube de prélèvement, aucune éclaboussure ne se produit vers l'extérieur. Le prélèvement étant effectué, la mise à niveau se fait automatiquement, le liquide en excès qui a pu être déversé dans la cuve retournant à l'intérieur du récipient de stockage.

Un tel dispositif de conception particulièrement simple présente un grand intérêt par le fait qu'il permet non seulement d'effectuer en toute sécurité une mesure précise de liquide mais que, par ailleurs, il élimine tout risque de fuite en cours de stockage ou de transport.

Bien entendu, si dans l'exemple qui précède, l'invention a été décrite pour un dispositif amovible à l'intérieur du goulot du récipient, il pourrait être envisagé de réaliser des récipients dans lesquels un tel dispositif serait fixé de manière permanente. Par ail leurs, si dans l'exemple de réalisation décrit, la surface inférieure de la coupelle ou cuvette (10) est plane, de préférence elle présentera une partie légèrement en relief, en forme de cône (représenté en pointillés à la figure 2) et ce, de manière à pouvoir venir s'encastrer à l'intérieur du conduit (6) lorsque l'ensemble est fermé comme représenté à la figure 4.

## Revendications

1/ Dispositif permettant d'assurer le prélèvement d'une quantité déterminée de liquide contenu dans un récipient (4) se présentant sous la forme d'un ensemble (1) adaptable dans le goulot (3) du récipient et ayant sensiblement la forme d'une cuve prolongée à sa base par un tube (7) formant plongeur et venant jusqu'à proximité du fond dudit récipient, cette cuve comportant un conduit interne (6) s'étendant sur une hauteur déterminée H définissant le volume de liquide prélevé, **caractérisé** en ce que ladite cuve (2) présente également, à sa partie supérieure, un ensemble (9), monté de manière flexible et pouvant venir, d'une part, plaquer contre l'extrémité du conduit de distribution (6) lorsque le récipient est fermé et, d'autre part, après ouverture, servir d'élément protecteur évitant tout rejet vers l'extérieur du liquide.

2/ Dispositif selon la revendication 1, caractérisé en ce que l'ensemble (9) est constitué par une coupelle ou cuvette (10) fixée à la cuve par l'intermédiaire de lames ou bras flexibles (11) autorisant un déplacement de sens axial, ladite coupelle (10) présentant à sa partie supérieure une couronne en relief (12) débordant légèrement au-dessus du plan supérieur de la cuvette (2) lorsque le récipient est ouvert et contre laquelle vient s'appuyer le fond du bouchon (14) de fermeture afin que la coupelle (10) vienne s'emboiter sur l'extrémité (15) du conduit de distribution (6) lorsque le récipient est fermé.

FIG.1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | GB-A-2 067 517 (AIDSA) <br> * En entier * <br> --- | 1,2 | G 01 F 11/28 <br> B 65 D 47/06 |
| Y | FR-A-2 305 364 (HENKEL) <br> * Page 4, ligne 33 - page 5, ligne 19; figures 1-3 * <br> ----- | 1,2 | |

DOMAINES TECHNIQUES RECHERCHES (Int. Cl.4)

B 65 D
G 01 F
A 47 K

Le présent rapport a été établi pour toutes les revendications

| Lieu de la recherche | Date d'achèvement de la recherche | Examinateur |
|---|---|---|
| LA HAYE | 11-05-1989 | BESSY M.J.F.M.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)